# EUROPÄISCHE PATENTSCHRIFT

(11) **EP 1 322 937 B1**
(45) Veröffentlichungstag und Bekanntmachung des Hinweises auf die Patenterteilung: **26.05.2004**
(21) Anmeldenummer: 01971809.7
(22) Anmeldetag: 28.07.2001
(51) Int. Cl.: G01N 21/25, G01N 21/57, G01N 21/47, G01J 3/50

(54) **VORRICHTUNG ZUM MESSEN VON FARBE, GLANZ UND WELLIGKEIT AN LACKIERTEN FREIFORM-OBERFLÄCHEN**
DEVICE FOR MEASURING COLOUR, LUSTRE AND UNDULATIONS ON LACQUERED FREEFORM SURFACES
DISPOSITIF POUR MESURER LA COULEUR, LA BRILLANCE ET L'ONDULATION SUR DES SURFACES LAQUEES DE FORME LIBRE

(30) Priorität: 29.09.2000 DE 10048723; 21.03.2001 DE 10113846
(43) Veröffentlichungstag der Anmeldung: 02.07.2003
(73) Patentinhaber: X-Rite GmbH, 10553 Berlin (DE)
(72) Erfinder: FLEISCHER, Johannes, 10553 Berlin (DE)
(74) Vertreter: Säger, Manfred, Dipl.-Ing.
(86) Internationale Anmeldenummer: PCT/EP2001/008778
(87) Internationale Veröffentlichungsnummer: WO 2002/027298

(56) Entgegenhaltungen:
- EP-A- 0 726 456
- DE-A- 19 758 260
- US-A- 4 989 984
- PATENT ABSTRACTS OF JAPAN vol. 011, no. 178 (P-584), 9. Juni 1987 (1987-06-09) & JP 62 008042 A (NISSAN MOTOR CO LTD), 16. Januar 1987 (1987-01-16)

## Beschreibung

Die Erfindung betrifft eine Vorrichtung zum Messen von Farbe, Glanz und Welligkeit an lackierten Freiformoberflächen in einem vorgebbaren Sollabstand und symmetrisch zur Flächennormalen am Messpunkt, der Messpunktnormalen.

Solche Vorrichtungen sind z.B. in US-A-4 989 984 und DE-A-197 58 260 offenbart.

Solche vorstehend genannten Vorrichtungen gemäß dem Oberbegriff des Hauptanspruchs sind als Handgeräte bekannt und dienen zur stichprobenweisen Messung von z.B. aus der Lackierung kommenden Autokarossen. Diese Messung gestaltet sich insbesondere bei den häufig vorkommenden Metallic-Lackierungen äußerst schwierig, da die zu messenden Flächen am Auto praktisch nie eben sind. Bei grösseren Krümmungen der Oberfläche ist eine präzise Farbmessung mit diesen bekannten Geräten nicht möglich, ganz abgesehen davon, dass solche Messungen sehr personal- und zeitaufwändig sind. In jedem Falle müssen die bekannten Handmessgeräte mit berührendem Kontakt zur Messoberfläche eingesetzt werden. Nachdem schon Abstandsänderungen von 0,1 mm und Winkeländerungen 0,1 Grad, die leicht beim Verkippen des Messgerätes bei der Messung an gekrümmten Oberflächen auftreten können, das Messergebnis stark beeinflussen, sind solche Handmessungen äußerst ungenau. Der größte Nachteil besteht jedoch darin, wie eingangs schon erwähnt, dass berührungslos nicht gemessen werden kann, weil ansonsten die Messungenauigkeiten zu groß werden.

Der Erfindung liegt deshalb die Aufgabe zu Grunde, eine gattungsgemässe Vorrichtung gemäss dem Oberbegriff des Hauptanspruchs so weiterzubilden, dass eine berührungslose Messung möglich ist.

Diese Aufgabe wird bei einer gattungsgemässen Vorrichtung gemäss dem Oberbegriff des Hauptanspruchs erfindungsgemäss durch dessen kennzeichnende Merkmale gelöst, insbesondere dadurch, dass ein in drei Dimensionen bewegbarer Messkopf mit einer Messkopfachse und einem Lichtsender sowie einer Videokamera vorgesehen ist, dass der Lichtsender mit einem zu sendenden flächigen Lichtmuster längs einer Strahlungsache versehen ist, dass die Videokamera eine optische Achse aufweist, dass die Messkopfachse, die Strahlungsache und die optische Achse in einer Ebene liegen und die Messkopfachse die Winkelhalbierende des von der Strahlungsachse und der optischen Achse gebildeten Winkels bildet, dass eine Auswerteeinrichtung für das in der Videokamera abgebildete Lichtmuster (Abbildmuster) des Lichtsenders vorgesehen ist, die ein in Abhängigkeit von der infolge nichtvorhandenen Sollabstandes und/oder nicht vorliegender Symmetrie zur Messpunktnormalen bewirkten Verzerrung bzw. Auswanderung des Abbildmusters gebildetes Steuersignal abgibt und dass eine Motorsteuerung für den Messkopf vorgesehen ist, an deren Eingang das Steuersignal anliegt und eine Bewegung des Messkopfs im Sinne der Verkleinerung der Verzerrung bzw. des Auswanderns des Abbildmusters in der Videokamera unter ein vorgebbares Mass bewirkt.

Mit der erfindungsgemässen Vorrichtung ist es möglich, lackierte Freiformoberflächen bezüglich deren Farbe, Glanz und Welligkeit zu messen. Hierzu wird von dem Messkopf zunächst am Messpunkt die Flächennormale als Messpunktnormale so ermittelt, dass die Messkopfachse mit dieser zusammenfällt. Zugleich kann durch die Verzerrung bzw. Auswanderung des Abbildmusters auf dem Kamerachip der Videokamera auch der richtige Abstand des Messkopfes von dem Messpunkt ermittelt werden, indem nämlich der Scheitelpunkt des Winkels zwischen der Strahlungsachse und der optischen Achse der Videokamera genau den Messpunkt bildet. In zweckmässiger Ausgestaltung kann aber auch am Messkopf ein zusätzlicher Abstandsmesser, beispielsweise ein Ultraschallmesskopf als Grobeinstellung vorgesehen sein, mit dessen Hilfe die Vorrichtung grob plaziert wird, bevor dioe Flächennormale am Meßpunkt bestimmt wird. Wenn der Messkopf durch die Steuersignale der Auswerteeinrichtung für die Motorsteuerung ausgerichtet ist, kann die eigentliche Messung beginnen.

Hierzu ist in den Messkopf eine weitere Lichtquelle, deren optische Austrittsachse vorzugsweise mit der Messkopfachse einen Winkel von 45 Grad einschliesst und dass das Licht dieser Messkopfachse von zumindest einem vorzugsweise vier Monochromatoren in vorgebbaren bestimmten Winkeln mit ihrer optischen Eintrittsachse zu der Messkopfachse so angeordnet sind, dass alle optischen Eintrittsachsen der Monochromatoren, die Messkopfachse des Messkopfes und die optische Austrittsachse der weiteren Lichtquelle in einer Ebene, nicht notwendigerweise derselben Ebene der Strahlungsachse des Lichtsenders und der optischen Achse der Videokamera angeordnet sind. Somit kann dann parallel dazu über die vier Monochromatoren die Farbe und der Glanz der lackierten Freiform-Oberfläche am Messpunkt festgestellt werden.

Weitere zweckmässige Ausgestaltungen und Weiterbildungen der Erfindung sind in den Unteransprüchen gekennzeichnet.

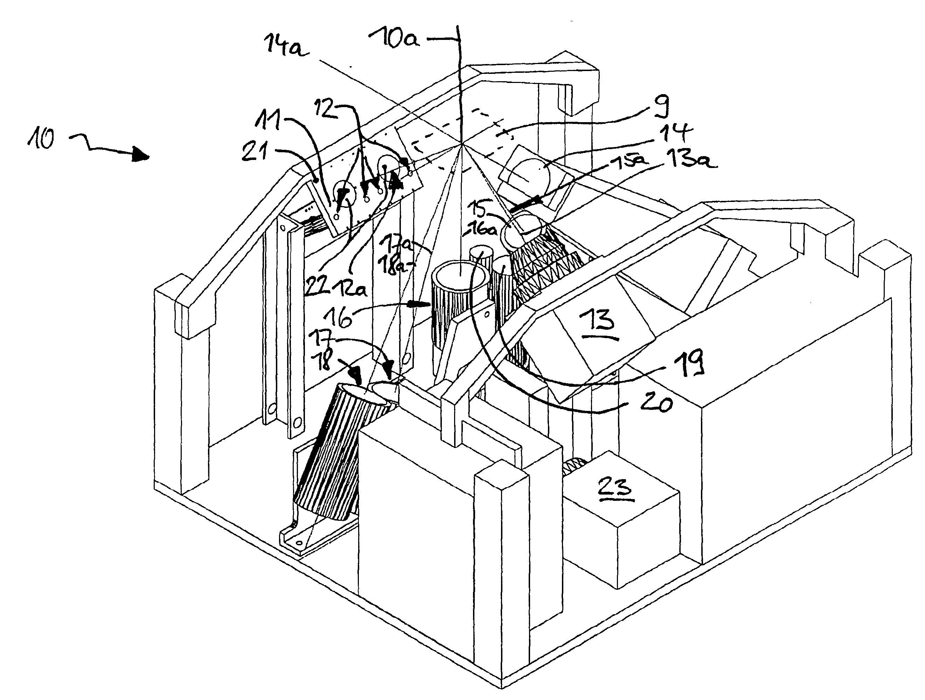

Ein Ausführungsbeispiel der Erfindung wird nachfolgend unter Bezugnahme auf die Zeichnung näher erläutert, die eine erfindungsgemäße Vorrichtung in schematischer perspektivischer Darstellung und teilweise abgenommenem Gehäuse dargestellt ist.

Die Vorrichtung zum Messen der Farbe an lackierten Freiform-Oberflächen in einem vorgebbaren Sollabstand sowie symmetrisch zur Meßpunktnormalen weist einen insgesamt mit 10 bezeichnenden Meßkopf, der mit einer Meßkopfachse 10a versehen ist. Der insgesamt von einem (nicht dargestellten) Motor bewegbare Meßkopf 10 ist mit einem insgesamt mit 11 bezeichneten Lichtsender und einer dessen zu sendendes flächiges Lichtmuster 12 aufnehmenden Videokamera 13 versehen, deren optische Achse 13a in Richtung auf die insgesamt mit 9 bezeichnete Probe ausgerichtet ist. Das Lichtmuster 12 ist mit einer insgesamt mit 12a bezeichneten Strahlungsachse versehen, die ebenfalls auf die Probe 9 ausgerichtet ist.

Hierbei liegen die optische Achse 13a, die Strahlungsachse 12a sowie die Meßkopfachse 10a in einer Ebene, wobei die Meßkopfachse 10a die winkelhalbierende bildet zu dem von der Strahlungsachse 12a und der optischen Achse 13a der Videokamera 13 gebildeten Winkels darstellt.

Ferner ist eine Auswerteeinrichtung für das in der Videokamera abgebildete Abbildmuster des Lichtsenders 12 vorgesehen, welche ein in Abhängigkeit von der infolge nicht vorhandenen Sollabstandes und/oder nicht vorliegender Symmetrie zur Meßpunktnormalen bewirkten Verzerrung bzw. des Auswanderns des Abbildmusters gebildetes Steuersignal abgibt. Dieses Steuersignal wird an eine (nicht gezeigte) Motorsteuerung für den Meßkopf 10 angelegt, wodurch eine Bewegung des Meßkopfes im Sinne der Verkleinerung der Verzerrung bzw. des Auswandern des Abbildmusters in der Videokamera 13 unter ein vorgebbares Maß dergestalt bewirkt wird, daß sowohl die Meßkopfachse 10a als auch der Scheitelpunkt des von der Strahlungsachse 12a des Lichtmusters 12 sowie der optischen Achse 13a der Videokamera 3 gebildeten Winkels mit dem Meßpunkt, nämlich der Probe 9 zusammenfällt. In dem Meßkopf ist eine weitere Lichtquelle 14 mit einer optischen Austrittsachse 14a vorgesehen, die mit der Geräteachse 10a einen Winkel von 45° einschließt.

Ferner sind in dem Meßkopf 10 vier Monochromatoren 15, 16, 17, 18 vorgesehen, die in vorgebbaren bestimmten Winkeln mit deren optischen Eintrittsachse 15a, 16a, 17a und 18a ausgerichtet vorgesehen sind. All diese optischen Eintrittsachsen 15a, 16a, 17a und 18a sind auf den Meßpunkt 9 ausgerichtet und liegen in einer weiteren Ebene, in der auch die optische Austrittsachse 17a der weiteren Lichtquelle 14 liegt. Hierbei sind die Flächennormale der Ebene und Flächennormale der letztgenannten weiteren Ebene rechtwinklig zueinander angeordnet. Außerdem ist ein auf den Meßpunkt hin ausgerichtetes Infrarot-Thermometer 19 sowie gegebenenfalls ein Ultraschallsensor 20 zur groben Abstandseinstellung in dem Meßkopf 10 vorgesehen.

Weiterhin ist in dem Meßkopf 10 eine weitere Kamera 23 vorgesehen, die über einen im Bereich der Meßkopfachse 10a angeordneten (in der Zeichnung nicht sichtbaren Spiegel ein Abbild des Meßpunktes bzw. der Probe 9 mit zwei hellen Streifen auf schwarzem Grund abbildet, wobei deren Fourier-Zerlegung den Grad der Welligkeit bzw. des Glanzes ergibt.

Alle Meßsignale und Meßwerte können aufgezeichnet und gespeichert sowie gegebenenfalls on-line über ein Interface an einen Prozeßrechner abgegeben werden.

## Patentansprüche

1. Vorrichtung zum Messen von Farbe, Glanz und Welligkeit an lackierten Freiform-Oberflächen in einem vorgebbaren Sollabstand und symmetrisch zur Messpunktnormalen an einem Meßpunkt (9), **dadurch gekennzeichnet, dass** ein in drei Dimensionen von zumindest einem Motor bewegbarer Messkopf (10) mit einer Messkopfachse (10a) und einem Lichtsender (11) sowie einer Videokamera (13) vorgesehen ist, dass der Lichtsender (11) mit einem längs seiner Strahlungsachse (12a) zu sendenden flächigen Lichtmuster (12), vorzugsweise Lichtpunktmuster versehen ist, dass die Videokamera (13) eine optische Achse (13a) aufweist, dass die Messkopfachse (10a), die Strahlungsachse (12a) und die optische Achse (13a) in einer Ebene liegen, und die Messkopfachse (10a) die Winkelhalbierende des von der Strahlungsachse (12a) und der optischen Achse (13a) gebildeten Winkels bildet, dass eine Auswerteeinrichtung für das in der Videokamera abgebildete Lichtmuster (12) des Lichtsenders vorgesehen ist, welche Auswerteeinrichtung ein in Abhängigkeit von der infolge nicht vorhandenen Sollabstandes und/oder nicht vorliegender Symmetrie zur Messpunktnormalen bewirkten Verzerrung bzw. des Auswanderns des Abbildmusters gebildetes Steuersignal abgibt, und dass eine Motorsteuerung für den Messkopf vorgesehen ist, an deren Eingang das Steuersignal der Auswerteeinrichtung anliegt und eine Bewegung des Messkopfs (10) im Sinne der Verkleinerung der Verzerrung bzw. des Auswanderns des Abbildmusters in der Videokamera (13) unter ein vorgebbares Maß dergestalt bewirkt, dass sowohl die Messkopfachse (10a) mit der Messpunktnormalen als auch der Scheitelpunkt des von der Strahlungsachse (12a) des Lichtsenders (12) sowie der optischen Achse (13a) der Videokamera (13) gebildeten Winkels mit dem Messpunkt (9) zusammenfällt.

2. Vorrichtung nach Anspruch 1, **dadurch gekennzeichnet, dass** in dem Messkopf (10) eine weitere Lichtquelle (14) vorgesehen ist.

3. Vorrichtung nach Anspruch 2, **dadurch gekennzeichnet, dass** die optische Austrittsachse (14a) der weiteren Lichtquelle (14) mit der Messkopfachse (10a) einen Winkel von 45 Grad einschliesst.

4. Vorrichtung nach einem der Ansprüche 1 bis 3, **dadurch gekennzeichnet, dass** in dem Messkopf (10) zumindest ein vorzugsweise vier Monochromatoren (15, 16, 17, 18) in vorgebbaren bestimmten Winkeln mit deren optischer Eintrittsachse (15a, 16a, 17a, 18a) jeweils zu der Messkopfachse (10a) ausgerichtet vorgesehen sind.

5. Vorrichtung nach Anspruch 4, **dadurch gekennzeichnet, dass** die optische Austrittsachse (14a) der weiteren Lichtquelle (14) sowie die optischen Eintrittsachsen (15a, 16a, 17a, 18) der Monochromatoren (15, 16, 17, 18) auf den Messpunkt (9) ausgerichtet sind.

6. Vorrichtung nach Anspruch 5, **dadurch gekennzeichnet, dass** die optische Austrittsachse der weiteren Lichtquelle (14) sowie die optischen Eintrittsachsen (15a, 16a, 17a, 18a) der Monochromatoren (15, 16, 17, 18) und die Messkopfachse (10a) in einer weiteren Ebene liegen.

7. Vorrichtung nach einem der Ansprüche 1 bis 6, **dadurch gekennzeichnet, dass** die Flächennormale der Ebene sowie die Flächennormale der weiteren Ebene miteinander einen rechten Winkel bilden.

8. Vorrichtung nach einem der Ansprüche 1 bis 7, **dadurch gekennzeichnet, dass** in dem Messkopf (10) ein auf den Messpunkt ausgerichtetes Infrarot-Thermometer (19) zum Messen der Temperatur an Messpunkt (9) vorgesehen ist.

9. Vorrichtung nach einem der Ansprüche 1 bis 8, **dadurch gekennzeichnet, dass** das Lichtmuster (12) des Lichtsenders (11) auf einer Platte (21) angeordnet ist.

10. Vorrichtung nach Anspruch 9, **dadurch gekennzeichnet, dass** das Lichtmuster (12) zumindest zwei zueinander rechtwinklig verlaufende, sich längs einer Geraden erstreckende Reihen mit voneinander beabstandeten Lichtpunkten (12) aufweist.

11. Vorrichtung nach Anspruch 10, **dadurch gekennzeichnet, dass** auf der Platte (21) zumindest eine Öffnung (22) vorgesehen ist, unter der mit größerem Abstand von der Messkopfachse (10a) ein zusätzliches Lichtpunktmuster angeordnet ist.

12. Vorrichtung nach Anspruch 11, **dadurch gekennzeichnet, dass** das zusätzliche Lichtpunktmuster ebenfalls zumindest zwei zueinander rechtwinklig verlaufende, sich längs einer Geraden erstreckende Reihen mit voneinander beabstandeten Lichtpunkten aufweist, deren Abstand voneienader aber geringer als bei dem Lichtmuster ist.

13. Vorrichtung nach einem der Ansprüche 1 bis 12, **dadurch gekennzeichnet, dass** der Messkopf (10) einen Ultraschallmesskopf (20) als Grobeinstellung aufweist, mit dessen Hilfe der Messkopf (10) grob plaziert wird, bevor die Flächennormale am Meßpunkt als Meßpunktnormale bestimmt wird.

14. Vorrichtung nach einem der Ansprüche 1 bis 13, **dadurch gekennzeichnet, dass** die Auswerteeinrichtung aus der vorhandenen Verzerrung oder Auswanderung des Abbildmusters ein erste Näherung einer Korrektur berechnet und als Steuersignal an die Motorsteuerung im Sinne einer Regelung abgibt, wonach die Auswerteeinrichtung aus dem sich ergebenden neuen Abbildmuster eine weitere Näherung berechnet und diese Vorgänge solange iterativ wiederholt werden, bis das Abbildmuster (12) um den Abbildungsmaßstab der Videokamera (13) vergrößert oder verkleinert genau der Form des Lichtmusters (12) des Lichtsenders (11) entspricht.

15. Vorrichtung nach einem der Ansprüche 1 bis 14, **dadurch gekennzeichnet, dass** eine weitere Kamera (23) über einen im Bereich der Messkopfachse (10a) angeordneten Spiegel ein Abbild des Messpunktes mit zwei hellen Streifen auf schwarzem Grund erhält, deren Fourier-Zerlegung den Grad der Welligkeit bzw. des Glanzes ergibt.

## Claims

1. Device for measuring the colour, gloss and waviness of freely formed, painted surfaces at a predeterminable target distance from a measuring point (9) and symmetrically to the measuring-point perpendicular, **characterised in that** a measuring head (10) movable in three dimensions by means of at least one motor is provided with a measuring head-axis (10a), an opto-transmitter (11) and a video camera (13); that the opto-transmitter (11) is provided with a flat light pattern (12), preferably a light-point pattern, to be transmitted along its radiation axis (12a); that the video camera (13) provides an optical axis (13a); that the measuring-head axis (10a), the radiation axis (12a) and the optical axis (13a) are disposed in one plane, and the measuring-head axis (10a) forms a bisecting line of the angle formed by the radiation axis (12a) and the optical axis (13a); that an evaluation device is provided for the light pattern (12) of the opto-transmitter imaged in the video camera, which evaluation device emits a control signal formed in dependence upon the distortion and/or drift of the image pattern caused by the consequent absence of the target distance and/or the absence of symmetry relative to the measuring-point perpendicular; and that a motor-control unit is provided for the measuring head, to the input of which, the control signal from the evaluation device is connected and brings about a movement of the measuring head (10), thereby reducing the distortion and/or the drift of the image pattern in the video camera (13) subject to a predetermined scale, in such a manner that the measuring-head axis (10a) coincides with the measuring-point perpendicular, and also that the apex of the angle formed by the radiation axis (12a) of the opto-transmitter (12) and the optical axis (13a) of the video camera (13) coincides with the measuring point (9).

2. Device according to claim 1, **characterised in that** a further light source (14) is provided in the measuring head (10).

3. Device according to claim 2, **characterised in that** the optical outlet axis (14a) of the further light source (14) encloses an angle of 45° with the measuring-head axis (10a).

4. Device according to any one of claims 1 to 3, **characterised in that** at least one, preferably four monochromators (15, 16, 17, 18) are provided in the measuring head (10) with their optical inlet axes (15a, 16a, 17a, 18a) orientated at different predetermined angles in each case relative to the measuring-head axis (10a).

5. Device according to claim 4, **characterised in that** the optical outlet axis (14a) of the further light source (14) and the optical inlet axes (15a, 16a, 17a, 18) of the monochromators (15, 16, 17, 18) are orientated towards the measuring point (9).

6. Device according to claim 5, **characterised in that** the optical outlet axis of the further light source (14), the optical inlet axes (15a, 16a, 17a, 18a) of the monochromators (15, 16, 17, 18) and the measuring-head axis (10a) are disposed in a further plane.

7. Device according to any one of claims 1 to 6, **characterised in that** the surface perpendicular of the plane and the surface perpendicular of the further plane form a right angle relative to one another.

8. Device according to any one of claims 1 to 7, **characterised in that** an infrared thermometer (19) orientated towards the measuring point is provided in the measuring head (10) for measuring the temperature at the measuring point (9).

9. Device according to any one of claims 1 to 8, **characterised in that** the light pattern (12) of the opto-transmitter (11) is arranged on a plate (21).

10. Device according to claim 9, **characterised in that** the light pattern (12) provides at least two rows of light points (12) running at right angles to one another, spaced at a distance from one another and extending along a straight line.

11. Device according to claim 10, **characterised in that** at least one aperture (22) is provided in the plate (21), beneath which an additional light-point pattern is arranged at a greater distance from the measuring-head axis (10a).

12. Device according to claim 11, **characterised in that** the additional light-point pattern also provides at least two rows of light points running at right angles to one another, spaced at a distance from one another and extending along a straight line, of which the distance from one another is, however, less than in the case of the light pattern (12).

13. Device according to any one of claims 1 to 12, **characterised in that** the measuring head (10) provides an ultrasound measuring head (20) for rough adjustment, with the assistance of which, the measuring head (10) is roughly positioned, before the surface perpendicular at the measuring point is determined as the measuring-point perpendicular.

14. Device according to any one of claims 1 to 13, **characterised in that**, from the existing distortion or drift of the image pattern, the evaluation device calculates a first approximation of a correction and transmits this as a control signal to the motor-control unit in the form of a control command, after which the evaluation device calculates a further approximation from the resulting new image pattern, and that these procedures are repeated iteratively until the image pattern (12), enlarged or reduced by the image scale of the video camera (13), exactly corresponds to the form of the light pattern (12) of the opto-transmitter (11).

15. Device according to any one of claims 1 to 14, **characterised in that** a further camera (23) receives the image of the measuring point with two light strips on a black background via a mirror arranged in the region of the measuring-head axis (10a), of which the Fourier analysis indicates the degree of waviness and/or gloss.

## Revendications

1. Dispositif pour la mesure de la couleur, de la brillance et de l'ondulation de surfaces de forme libre peintes, à un distance de consigne pouvant être prédéterminée et symétriquement à la normale au point de mesure, sur un point de mesure (9), **caractérisé en ce qu'**une tête de mesure (10) qui peut être déplacée dans trois dimensions par au moins un moteur et qui possède un axe de tête de mesure (10a) et un émetteur de lumière (11), ainsi qu'une caméra vidéo (13), **en ce que** l'émetteur de lumière (11) est muni d'un motif lumineux (12), de surface étendue, de préférence un motif de points lumineux, qui doit être émis le long de son axe de rayonnement (12a), **en ce que** la caméra vidéo (13) possède un axe optique (13a), **en ce que** l'axe de tête de mesure (10a), l'axe de rayonnement (12a) et l'axe optique (13a) sot contenus dans un même plan et l'axe de tête de mesure (10a) forme la bissectrice de l'angle formé par l'axe de rayonnement (12a) et par l'axe optique (13a), **en ce qu'**il est prévu un dispositif d'analyse pour le motif lumineux (12) de l'émetteur de lumière dont l'image se forme dans la caméra vidéo, lequel dispositif d'analyse émet un signal de commande formé en fonction de la distorsion ou de la dérive du motif image qui est provoquée par l'absence de la distance de consigne et/ou par l'absence de symétrie par rapport à la normale au point de mesure et **en ce qu'**il est prévu une commande de moteur pour la tête de mesure, à l'entrée de laquelle est appliqué le signal de commande du dispositif d'analyse et qui détermine un déplacement de la tête de mesure (10) tendant à ramener la distorsion ou la dérive du motif image dans la caméra vidéo (13) au-dessous d'un taux pouvant être prédéterminé, de telle manière que l'axe de tête de mesure (10a) coïncide avec la normale au point de mesure et que, de même, le sommet de l'angle formé par l'axe de rayonnement (12a) de l'émetteur de lumière (12) et l'axe optique (13a) de la caméra vidéo (13) coïncide avec le point de mesure (9).

2. Dispositif selon la revendication 1, **caractérisé en ce qu'**une autre source de lumière (14) est prévue dans la tête de mesure (10).

3. Dispositif selon la revendication 2, **caractérisé en ce que** l'axe de sortie optique (14a) de l'autre source de lumière (14) forme un angle de 15 degrés avec l'axe de tête de mesure (10a).

4. Dispositif selon une des revendications 1 à 3, **caractérisé en ce qu'**il est prévu dans la tête de mesure (10), au moins un, et de préférence quatre, monochromateurs (15, 16, 17, 18) dont les axes d'entrée optiques (15a, 16a, 17a, 18a) sont orientés selon certains angles pouvant être prédéterminés avec l'axe de tête de mesure (10a).

5. Dispositif selon la revendication 4, **caractérisé en ce que** l'axe de sortie optique (14a) de l'autre source lumineuse (14) ainsi que les axes d'entrée optiques (15a, 16a, 17a, 18a) des monochromateurs (15, 16, 17, 18) sont orientés vers le point de mesure (9).

6. Dispositif selon la revendication 5, **caractérisé en ce que** l'axe de sortie optique de l'autre source lumineuse (14) ainsi que les axes d'entrée optiques (15a, 16a, 17a, 18a) des monochromateurs (15, 16, 17, 18) et l'axe de tête de mesure (10) sont contenus dans un autre plan.

7. Dispositif selon une des revendications 1 à 6, **caractérisé en ce que** la normale à la surface du plan ainsi que la normale à la surface de l'autre plan forment entre elles un angle droit.

8. Dispositif selon une des revendications 1 à 7, **caractérisé en ce que**, dans la tête de mesure (10), est prévu un thermomètre à infrarouges (19) orienté vers le point de mesure, et destiné à mesurer la température au point de mesure (9).

9. Dispositif selon une des revendications 1 à 8, **caractérisé en ce que** le motif lumineux (12) de l'émetteur de lumière (11) est disposé sur une plaque (21).

10. Dispositif selon la revendication 9, **caractérisé en ce que** le motif lumineux (12) présente au moins deux rangées de points lumineux (12) espacés les uns des autres, disposées perpendiculairement entre elles, s'étendant le long d'une droite.

11. Dispositif selon la revendication 10, **caractérisé en ce qu'**il est prévu, sur la plaque (21) au moins une ouverture (22) sous laquelle est disposé un motif de points lumineux additionnel, placé à une plus qrande distance de l'axe de tête de mesure (10a).

12. Dispositif selon la revendication 11, **caractérisé en ce que** le motif de points lumineux additionnel présente de même au moins deux rangées de points lumineux espacés les uns des autres, disposées perpendiculairement entre elles et qui s'étendent le long d'une droite, mais dans lesquelles la distance d'écartement mutuel est plus petite que dans le motif lumineux (12).

13. Dispositif selon une des revendications 1 à 12, **caractérisé en ce que** la tête de mesure (10) présente une tête de mesure à ultrasons (20) servant de réglage approché, à l'aide de laquelle la tête de mesure (10) est mise en place de façon approchée avant que la normale à la surface au point de mesure soit déterminée en tant que normale au point de mesure.

14. Dispositif selon une des revendications 1 à 13, **caractérisé en ce que** le dispositif d'analyse calcule, à partir de la distorsion ou dérive existante du motif image, une première approximation d'une correction et la transmet en qualité de signal de commande à la commande du moteur pour une régulation, après quoi le dispositif d'analyse calcule une nouvelle approximation à partir du nouveau motif image obtenu et **en ce que** ces opérations sont répétées itérativement jusqu'à ce que le motif image (12), agrandi ou diminué dans une mesure égale à l'échelle de reproduction de la caméra vidéo (13), corresponde exactement à la forme du motif lumineux (12) de l'émetteur de lumière (11).

15. Dispositif selon une des revendications 1 à 14, **caractérisé en ce qu'**une autre caméra (23) reçoit, par l'intermédiaire d'un miroir disposé dans la région de l'axe de tête de mesure (10a), une image du point de mesure qui comprend deux bandes claires sur fond sombre et dont la transformation de Fourier donne le degré de l'ondulation ou de la brillance.
